# EUROPEAN PATENT APPLICATION

(11) **EP 4 618 301 A1**
(43) Date of publication of application: **17.09.2025**
(21) Application number: 24886150.2
(22) Date of filing: 25.10.2024
(51) Int. Cl.: H01M 50/531, H01M 50/533, H01M 50/536, H01M 10/04

(54) **ELECTRODE ASSEMBLY FOR SECONDARY BATTERY AND BATTERY CELL COMPRISING SAME**

(30) Priority: 01.11.2023 KR 20230149455
(71) Applicant: LG Energy Solution, Ltd., Seoul 07335 (KR)
(72) Inventor: CHO, Woo Hyung, Daejeon 34122 (KR); YOO, Su Yeon, Daejeon 34122 (KR); LEE, Seok Kyeong, Daejeon 34122 (KR)
(74) Representative: Plasseraud IP
(86) International application number: PCT/KR2024/016385
(87) International publication number: WO 2025/095475

(57) **Abstract**

Disclosed are a secondary battery electrode assembly and a battery cell including the same, and more particularly a secondary battery electrode assembly including at least one positive electrode including a positive electrode current collector and a positive electrode tab extending from the positive electrode current collector in one direction, at least one negative electrode including a negative electrode current collector and a negative electrode tab extending from the negative electrode current collector in one direction, a separator interposed between the at least one positive electrode and the at least one negative electrode, a positive electrode lead electrically connected to the positive electrode tabs, and a negative electrode lead electrically connected to the negative electrode tabs, wherein the positive electrode current collector has a first resin layer interposed between a pair of aluminum layers, and a first metal foil is interposed between the positive electrode tabs and between an outermost positive electrode tab and the positive electrode lead, and a battery cell including the same.

## Description

### [Technical Field]

This application claims the benefit of priority to Korean Patent Application No. 2023-0149455 filed on November 1, 2023, the disclosure of which is incorporated herein by reference in its entirety.

The present invention relates to a secondary battery electrode assembly and a battery cell including the same, and more particularly to a secondary battery electrode assembly having a structure in which electrode tabs, each of which has a structure in which a resin layer is interposed between a pair of metal layers, can be firmly connected and fixed to an electrode lead and a battery cell including the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Particularly, in the case of a pouch-shaped secondary battery, a plurality of positive electrodes each having a predetermined size and a plurality of negative electrodes each having a predetermined size are sequentially stacked in the state in which separators are interposed therebetween, and electrode tabs or a pair of electrode leads connected to the electrode tabs protrude outward from one side or opposite sides of a case.

Meanwhile, an aluminum current collector is commonly used as a positive electrode current collector to which a positive electrode active material is applied. However, the aluminum current collector has been pointed out as a major source of ignition due to various causes, and research is underway to replace the aluminum current collector with a multilayer current collector, such as a current collector having a structure in which a resin layer is interposed between two metal layers.

When such a three-layer current collector is used, it is expected that safety can be improved because the thin metal layer has a large resistance in the event of short circuit and can quickly cut off the current flow.

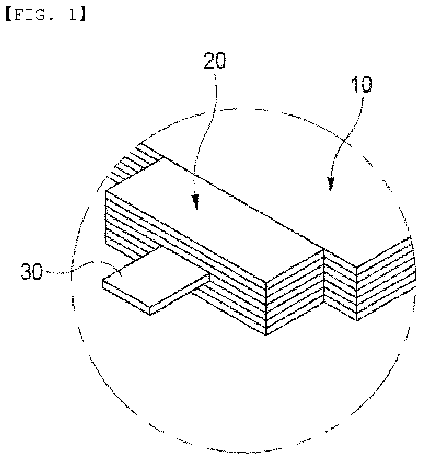

FIG. 1 is a partial schematic view of a conventional secondary battery. As shown in FIG. 1, the electrode assembly 10 has a structure in which a plurality of tabs 20 extends outward and an electrode lead 30 is interposed between the tabs 20 and fixed thereto by welding.

However, in the case of a three-layer current collector, it is difficult to couple the electrode tabs to the electrode lead by general welding methods because the resin layer is provided in the middle.

### (Prior Art Documents)

(Patent Document 1) Korean Patent Application Publication No. 2022-0124358
(Patent Document 2) Korean Patent Application Publication No 2023-0020177

### [Disclosure]

### [Technical Problem]

The present invention has been made in view of the above problems, and it is an object of the present invention to provide a secondary battery electrode assembly having a structure in which electrode current collectors each having a resin layer interposed between metal layers can be firmly connected to each other and a battery cell including the same.

It is another object of the present invention to provide a secondary battery electrode assembly having a structure in which an electrode current collector having a resin layer interposed between metal layers and an electrode lead can be firmly connected to each other and a battery cell including the same.

### [Technical Solution]

A secondary battery electrode assembly according to the present invention to accomplish the above objects includes at least one positive electrode (100) including a positive electrode current collector (110) and a positive electrode tab (120) extending from the positive electrode current collector (110) in one direction, at least one negative electrode (200) including a negative electrode current collector (210) and a negative electrode tab (220) extending from the negative electrode current collector (210) in one direction, a separator (300) interposed between the at least one positive electrode (100) and the at least one negative electrode (200), a positive electrode lead (400) electrically connected to the positive electrode tabs (120), and a negative electrode lead (500) electrically connected to the negative electrode tabs (220), wherein the positive electrode current collector (110) has a first resin layer (112) interposed between a pair of aluminum layers (111), and a first metal foil (600) is interposed between the positive electrode tabs (120) and between the outermost positive electrode tab (120) and the positive electrode lead (400).

Also, in the secondary battery electrode assembly according to the present invention, the first metal foil (600) may be located along an edge of each of the positive electrode tabs (120) in a longitudinal direction.

Also, in the secondary battery electrode assembly according to the present invention, the first metal foil (600) may include a 1a metal foil (610)and a 1b metal foil (620), the 1a metal foil and the 1b metal foil being located along opposite edges of each of the positive electrode tabs (120) in the longitudinal direction, respectively.

Also, in the secondary battery electrode assembly according to the present invention, the first metal foil (600) may have a corrugated shape with repeated ridges and valleys formed by bending a band having a certain width and length.

Also, in the secondary battery electrode assembly according to the present invention, the first metal foil (600) may include aluminum.

Also, in the secondary battery electrode assembly according to the present invention, the positive electrode lead (400) may be fixed to the first metal foil (600) and the aluminum layer (111) by ultrasonic welding.

Also, in the secondary battery electrode assembly according to the present invention, the first resin layer (112) may be made of polyethylene terephthalate (PET).

Also, in the secondary battery electrode assembly according to the present invention, the negative electrode current collector (21) may have a second resin layer (212) interposed between a pair of copper layers (211), and a second metal foil (700) may be interposed between the negative electrode tabs (220) and between the outermost negative electrode tab (220) and the negative electrode lead

(500).

Also, in the secondary battery electrode assembly according to the present invention, the second metal foil (700) may be located along an edge of each of the negative electrode tabs (220) in the longitudinal direction.

Also, in the secondary battery electrode assembly according to the present invention, the second metal foil (700) may include a 2a metal foil (710) and a 2b metal foil (720), the 2a metal foil and the 2b metal foil being located along opposite edges of each of the negative electrode tabs (220) in the longitudinal direction, respectively.

Also, in the secondary battery electrode assembly according to the present invention, the second metal foil (700) may have a corrugated shape with repeated ridges and valleys formed by bending a band having a certain width and length.

Also, in the secondary battery electrode assembly according to the present invention, the second metal foil (700) may include copper, nickel-coated copper, or a nickel-copper alloy.

Also, in the secondary battery electrode assembly according to the present invention, the negative electrode lead (500) may be fixed to the second metal foil (700) and the copper layer (211) by ultrasonic welding.

Also, in the secondary battery electrode assembly according to the present invention, the second resin layer (212) may be made of polyethylene terephthalate (PET).

In addition, the present invention provides a battery cell including the secondary battery electrode assembly.

### [Advantageous Effects]

A secondary battery electrode assembly according to the present invention and a battery cell including the same have the advantage that ultrasonic welding is performed in the state in which a metal foil having a corrugated shape with repeated ridges and valleys formed by bending a band is disposed along an edge of an electrode tab in a longitudinal direction, whereby it is possible to firmly fix electrode tabs to each other.

In addition, the secondary battery electrode assembly according to the present invention and the battery cell including the same have the merit that ultrasonic welding is performed in the state in which a part of the metal foil interposed between the electrode tabs overlaps the electrode tab and an electrode lead therebetween, whereby it is possible to firmly fix the electrode tabs to the electrode lead.

### [Description of Drawings]

FIG. 1 is a partial schematic view of a conventional secondary battery.
FIG. 2 is an exploded perspective view of a secondary battery electrode assembly according to a first embodiment of the present invention.
FIG. 3 is a sectional view of a positive electrode in the secondary battery electrode assembly according to the first embodiment of the present invention.
FIG. 4 is a view of the secondary battery electrode assembly according to the first embodiment of the present invention when viewed in one direction.
FIG. 5 is a view of the secondary battery electrode assembly according to the first embodiment of the present invention when viewed in the other direction.
FIG. 6 is a flowchart illustrating a method of coupling a positive electrode tab, a first metal member, and a positive electrode lead to each other in the secondary battery electrode assembly according to the first embodiment of the present invention.
FIG. 7 is an exploded perspective view of a secondary battery electrode assembly according to a second embodiment of the present invention.
FIG. 8 is a sectional view of a negative electrode in the secondary battery electrode assembly according to the second embodiment of the present invention.
FIG. 9 is a view of the secondary battery electrode assembly according to the second embodiment of the present invention when viewed in one direction.
FIG. 10 is a view of the secondary battery electrode assembly according to the second embodiment of the present invention when viewed in the other direction.
FIG. 11 is a flowchart illustrating a method of coupling a negative electrode tab, a second metal member, and a negative electrode lead to each other in the secondary battery electrode assembly according to the second embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery electrode assembly according to the present invention and a battery cell including the same will be described with reference to the accompanying drawings.

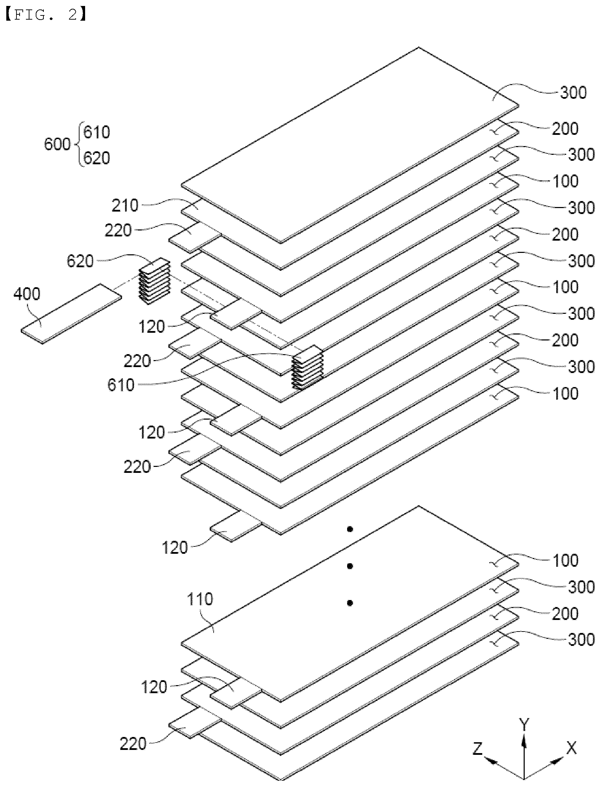

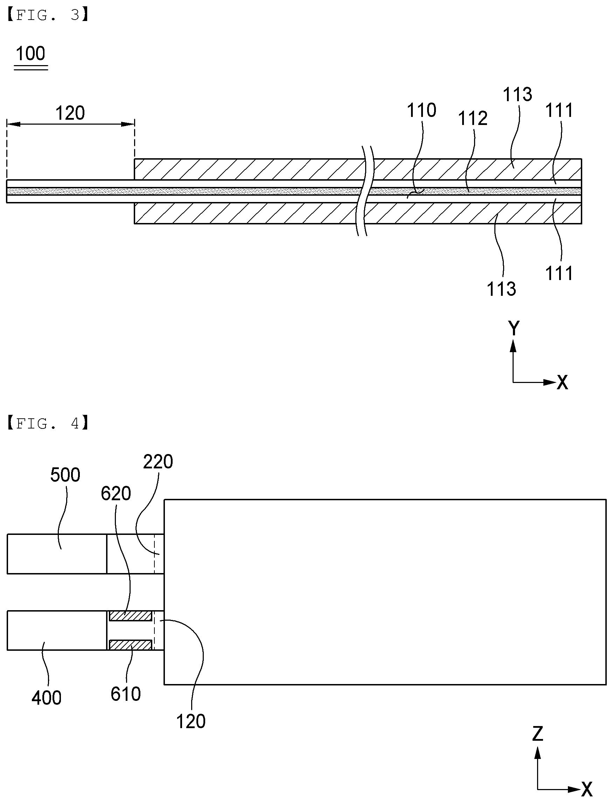

FIG. 2 is an exploded perspective view of a secondary battery electrode assembly according to a first embodiment of the present invention, and FIG. 3 is a sectional view of a positive electrode in the secondary battery electrode assembly according to the first embodiment of the present invention. As shown in FIGs. 2 and 3, the secondary battery electrode assembly according to the present invention has a structure in which at least one positive electrode 100, at least one negative electrode 200, and at least one separator 300 are stacked.

Specifically, the separator 300 may be located between the positive electrode 100 and the negative electrode 300, on an upper surface of the uppermost negative electrode 300, or under the lowermost negative electrode 300; however, the present invention is not necessarily limited thereto.

In addition, a positive electrode lead 400 is electrically connected to the positive electrode 100, and a negative electrode lead 500 is electrically connected to the negative electrode 200. In particular, a first metal foil 600 is interposed between the positive electrodes 100 and between the positive electrode 100 and the positive electrode lead 400, which will be described in detail later.

First, the positive electrode 100 may include a positive electrode current collector 110 and a positive electrode tab 120. In the first preferred embodiment of the present invention, the positive electrode current collector 110 has a three-layer structure in which a first resin layer 112 is interposed between a pair of aluminum layers 111.

Here, each of the aluminum layers has a thickness of approximately 0.5 to 2 µm, and the first resin layer is made of polyethylene terephthalate (PET) and has a thickness of approximately 5 to 10 µm; however, the present invention is not necessarily limited thereto.

Stainless steel, aluminum, nickel, titanium, sintered carbon, or aluminum or stainless steel, the surface of which is treated with carbon, nickel, titanium, or silver, may be used instead of aluminum, as long as it is possible to exhibit high conductivity while not inducing any chemical change in a battery. In addition, a micro-scale uneven pattern may be formed on the surface thereof so as to increase adhesion of a positive electrode active material, or various forms, such as a film, a sheet, a foil, a net, a porous body, a foam body, and a non-woven fabric body, may be used.

Each of an upper surface and a lower surface of the pair of aluminum layers 111 exposed to the outside is provided with a positive electrode active material layer 113.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃, or LiNiₓMn₂₋ₓO₄ (0.01 ≤ x ≤ 0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

Meanwhile, an uncoated portion (not shown) of the positive electrode current collector 110 where no positive electrode active material layer is formed is punched into a predetermined shape to form a positive electrode tab 120.

The negative electrode 200 may include a negative electrode current collector 210 and a negative electrode tab 220. The negative electrode current collector 210 is generally manufactured so as to have a thickness of 3 to 500 µm. The negative electrode current collector is not particularly restricted as long as the negative electrode current collector exhibits high conductivity while the negative electrode current collector does not induce any chemical change in a battery. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

In addition, the negative electrode current collector may have a micro-scale uneven pattern formed on the surface thereof in order to increase adhesion of a negative electrode active material, or may be configured in any of various forms, such as a film, a sheet, a foil, a net, a porous body, a foam body, and a non-woven fabric body.

Each of an upper surface and a lower surface of the negative electrode current collector 210 is provided with a negative electrode active material layer. As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the negative electrode active material may be further mixed with a conductive agent and a binder to form the negative electrode active material layer.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

Meanwhile, an uncoated portion (not shown) of the negative electrode current collector 210 where no negative electrode active material layer is formed is punched into a predetermined shape to form a negative electrode tab 220.

The separator 300 prevents short circuit between the positive electrode 100 and the negative electrode 200 and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

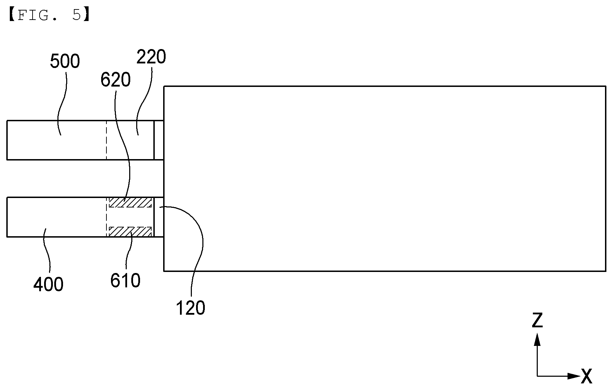

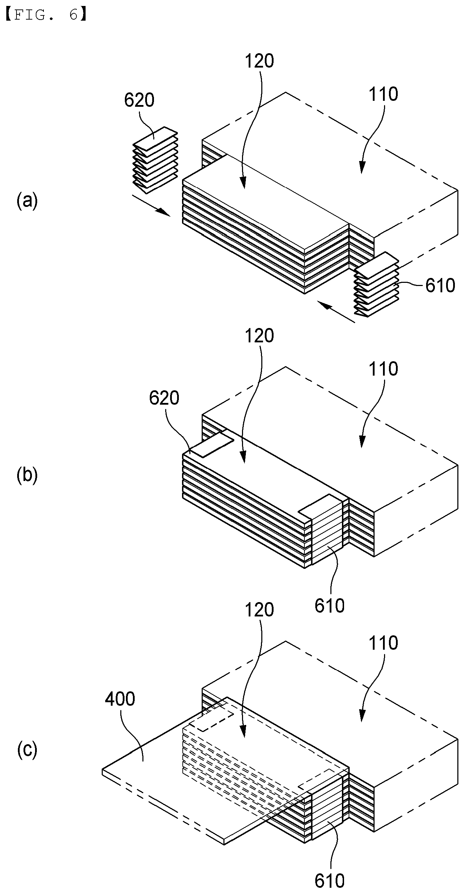

FIG. 4 is a view of the secondary battery electrode assembly according to the first embodiment of the present invention when viewed in one direction, FIG. 5 is a view of the secondary battery electrode assembly according to the first embodiment of the present invention when viewed in the other direction, and FIG. 6 is a flowchart illustrating a method of coupling the positive electrode tab, a first metal member, and the positive electrode lead to each other in the secondary battery electrode assembly according to the first embodiment of the present invention.

The electrical connection structure between the positive electrode tabs 120 and the positive electrode lead 400 will be described with reference to FIGs. 2 to 6.

In general, a positive electrode tab is only made of metal and may be coupled to a positive electrode lead by ultrasonic welding or the like. However, as described above, each of the positive electrode current collector and the positive electrode tab according to the first embodiment of the present invention has a structure in which the first resin layer is interposed between the pair of aluminum layers. That is, it is difficult to firmly fix a plurality of positive electrode tabs to each other and to firmly fix the positive electrode tabs and the positive electrode lead to each other by ultrasonic welding due to the first resin layer constituting each positive electrode tab.

In the first embodiment of the present invention, therefore, a first metal foil 600 is disposed between the positive electrode tabs 120 and between the outermost positive electrode tab 120 and the positive electrode lead 400.

More specifically, the first metal foil 600 has a corrugated shape with repeated ridges and valleys formed by bending a band having a certain width and length, and the first metal foil 600 is located at an edge of each of the positive electrode tabs 120 in a longitudinal direction.

Although the first metal foil 600 may be formed as one piece and be provided on one edge of each of the positive electrode tabs 120 in the longitudinal direction, it is more preferable for the first metal foil 600 to include a 1a metal foil 610 and a 1b metal foil 620, which are provided on opposite edges of each of the positive electrode tabs 120 in the longitudinal direction, respectively, such that the positive electrode tabs 120 can be more firmly fixed to the positive electrode lead 400.

As a result, the 1a metal foil 610 and/or the 1b metal foil 620 are located between the uppermost positive electrode tab 120 and the positive electrode lead 400, including between all the positive electrode tabs 120, and the above components are fixed to each other by ultrasonic welding, whereby the positive electrode tabs 120 are electrically connected to the positive electrode lead 400 via the first metal foil 600.

Meanwhile, the first metal foil 600 preferably includes the same aluminum material as the aluminum layer 111, but the material may be changed as long as the same function can be performed.

The length of the first metal foil 600 is not particularly limited, but it is preferable for the first metal foil not to protrude out of the positive electrode tab 120.

The positive electrode lead 400 is preferably made of aluminum; however, the present invention is not necessarily limited thereto.

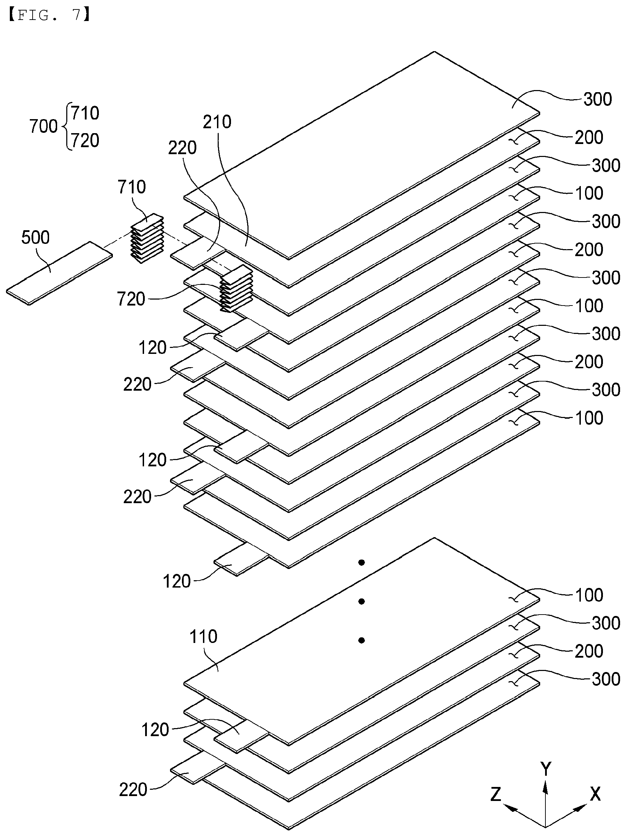

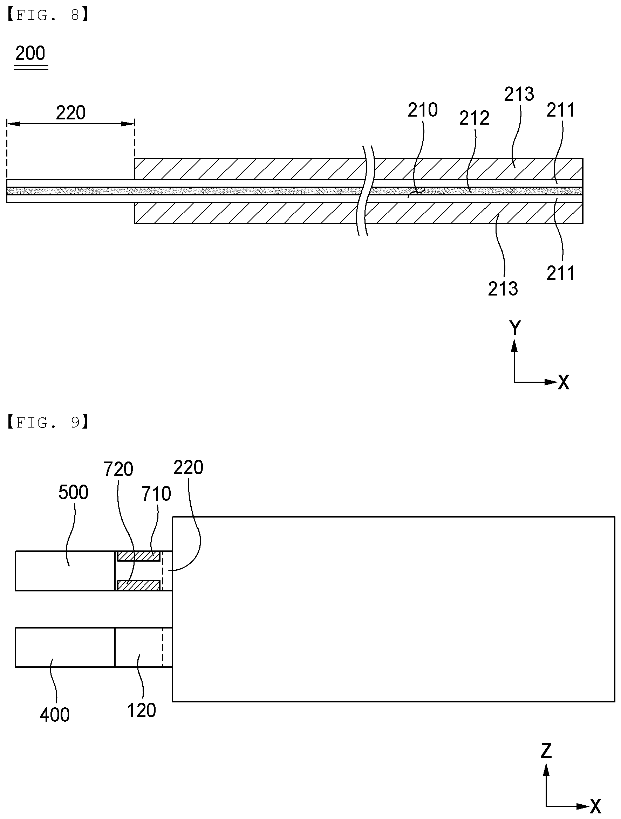

FIG. 7 is an exploded perspective view of a secondary battery electrode assembly according to a second embodiment of the present invention, and FIG. 8 is a sectional view of a negative electrode in the secondary battery electrode assembly according to the second embodiment of the present invention.

The secondary battery electrode assembly according to the second embodiment of the present invention has a structure in which at least one positive electrode 100, at least one negative electrode 200, and at least one separator 300 are stacked, in the same manner as in the first embodiment.

However, in the second embodiment, the negative electrode 200 has a three-layer structure, and a second metal foil 700 is interposed between the negative electrode 200 and a negative electrode lead 500, unlike the first embodiment; therefore, a duplicate description will be omitted and only different configurations will be described.

The negative electrode 200 may include a negative electrode current collector 210 and a negative electrode tab 220. In the second preferred embodiment of the present invention, the negative electrode current collector 210 has a three-layer structure in which a second resin layer 212 is interposed between a pair of copper layers 211.

Here, each of the copper layers has a thickness of approximately 0.5 to 2.0 µm, and the second resin layer is made of polyethylene terephthalate (PET) and has a thickness of approximately 3 to 10 µm; however, the present invention is not necessarily limited thereto.

Of course, stainless steel or the like may be used instead of copper as long as it is possible to exhibit high conductivity while not inducing any chemical change in a battery.

Each of an upper surface and a lower surface of the pair of copper layers 211 exposed to the outside is provided with a negative electrode active material layer 213. A negative electrode active material has been described previously, and therefore a description thereof will be omitted.

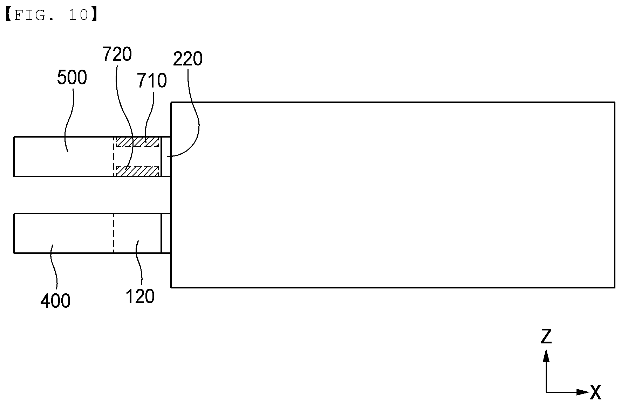

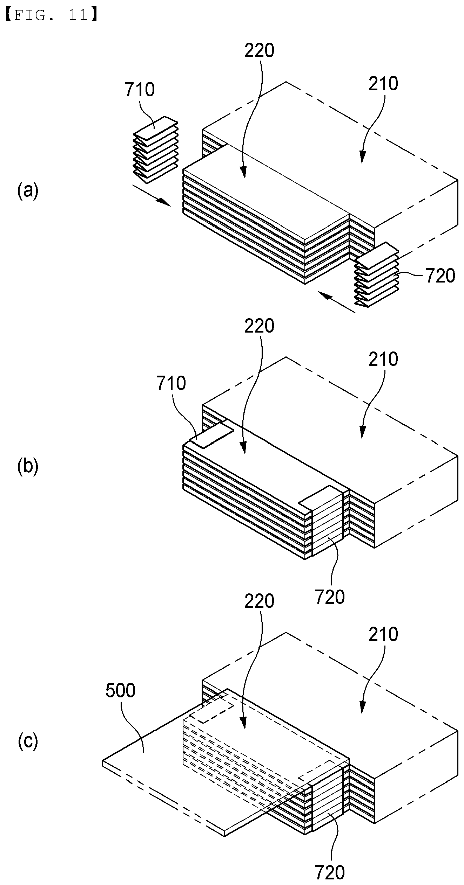

FIG. 9 is a view of the secondary battery electrode assembly according to the second embodiment of the present invention when viewed in one direction, FIG. 10 is a view of the secondary battery electrode assembly according to the second embodiment of the present invention when viewed in the other direction, and FIG. 11 is a flowchart illustrating a method of coupling the negative electrode tab, a second metal member, and the negative electrode lead to each other in the secondary battery electrode assembly according to the second embodiment of the present invention.

The electrical connection structure between the negative electrode tabs 220 and the negative electrode lead 500 will be described with reference to FIGs. 7 to 11.

In general, a negative electrode tab is only made of metal and may be coupled to a negative electrode lead by ultrasonic welding or the like. However, as described above, each of the negative electrode current collector and the negative electrode tab according to the second embodiment of the present invention has a structure in which the second resin layer is interposed between the pair of copper layers. That is, it is difficult to firmly fix a plurality of negative electrode tabs to each other and to firmly fix the negative electrode tabs and the negative electrode lead to each other by ultrasonic welding due to the second resin layer constituting each negative electrode tab.

In the second embodiment of the present invention, therefore, a second metal foil 700 is disposed between the negative electrode tabs 220 and between the outermost negative electrode tab 220 and the negative electrode lead 500.

More specifically, the second metal foil 700 has a corrugated shape with repeated ridges and valleys formed by bending a band having a certain width and length, and the second metal foil 700 is located at an edge of each of the negative electrode tabs 220 in the longitudinal direction.

Although the second metal foil 700 may be formed as one piece and be provided on one edge of each of the negative electrode tabs 220 in the longitudinal direction, it is more preferable for the second metal foil 700 to include a 2a metal foil 710 and a 2b metal foil 720, which are provided on opposite edges of each of the negative electrode tabs 220 in the longitudinal direction, respectively, such that the negative electrode tabs 220 can be more firmly fixed to the negative electrode lead 500.

As a result, the 2a metal foil 710 and/or the 2b metal foil 720 are located between the uppermost negative electrode tab 220 and the negative electrode lead 500, including between all the negative electrode tabs 220, and the above components are fixed to each other by ultrasonic welding, whereby the negative electrode tabs 220 are electrically connected to the negative electrode lead 500 via the second metal foil 700.

Meanwhile, the second metal foil 700 preferably includes the same copper material as the copper layer 111, nickel-coated copper, or a nickel-copper alloy, but the material may be changed as long as the same function can be performed.

The length of the second metal foil 700 is not particularly limited, but it is preferable for the second metal foil not to protrude out of the negative electrode tab 120.

Although not shown in the figures, a secondary battery electrode assembly according to a combination of the first embodiment and the second embodiment may be provided. For example, a positive electrode has a three-layer structure in which a first resin layer is interposed between a pair of aluminum layers, a negative electrode has a three-layer structure in which a second resin layer is interposed between a pair of copper layers, and a first metal foil and a second metal foil are interposed between a positive electrode tab and a positive electrode lead and between a negative electrode tab and a negative electrode lead, respectively.

The present invention may provide a battery cell including the secondary battery electrode assembly described above, a battery module or battery pack including the battery cell, or a battery pack including the battery module.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

- 100:: Positive electrode
- 110:: Positive electrode current collector
- 111:: Aluminum layer 112: First resin layer
- 113:: Positive electrode active material layer
- 120:: Positive electrode tab
- 200:: Negative electrode
- 210:: Negative electrode current collector
- 211:: Copper layer 212: Second resin layer
- 213:: Negative electrode active material layer
- 220:: Negative electrode tab
- 300:: Separator
- 400:: Positive electrode lead
- 500:: Negative electrode lead
- 600:: First metal foil
- 610:: 1a metal foil 620: 1b metal foil
- 700:: Second metal foil
- 710:: 2a metal foil 720: 2b metal foil

## Claims

1. A secondary battery electrode assembly comprising:
at least one positive electrode comprising a positive electrode current collector and a positive electrode tab extending from the positive electrode current collector in one direction;
at least one negative electrode comprising a negative electrode current collector and a negative electrode tab extending from the negative electrode current collector in one direction;
a separator interposed between the at least one positive electrode and the at least one negative electrode;
a positive electrode lead electrically connected to the positive electrode tabs; and
a negative electrode lead electrically connected to the negative electrode tabs, wherein
the positive electrode current collector has a first resin layer interposed between a pair of aluminum layers, and
a first metal foil is interposed between the positive electrode tabs and between an outermost positive electrode tab and the positive electrode lead.

2. The secondary battery electrode assembly according to claim 1, wherein the first metal foil is located along an edge of each of the positive electrode tabs in a longitudinal direction.

3. The secondary battery electrode assembly according to claim 2, wherein the first metal foil comprises a 1a metal foil and a 1b metal foil, the 1a metal foil and the 1b metal foil being located along opposite edges of each of the positive electrode tabs in the longitudinal direction, respectively.

4. The secondary battery electrode assembly according to claim 3, wherein the first metal foil has a corrugated shape with repeated ridges and valleys formed by bending a band having a certain width and length.

5. The secondary battery electrode assembly according to claim 3, wherein the first metal foil comprises aluminum.

6. The secondary battery electrode assembly according to claim 5, wherein the positive electrode lead is fixed to the first metal foil and the aluminum layer by ultrasonic welding.

7. The secondary battery electrode assembly according to claim 1, wherein the first resin layer is made of polyethylene terephthalate (PET).

8. The secondary battery electrode assembly according to claim 1, wherein
the negative electrode current collector has a second resin layer interposed between a pair of copper layers, and
a second metal foil is interposed between the negative electrode tabs and between an outermost negative electrode tab and the negative electrode lead.

9. The secondary battery electrode assembly according to claim 8, wherein the second metal foil is located along an edge of each of the negative electrode tabs in a longitudinal direction.

10. The secondary battery electrode assembly according to claim 9, wherein the second metal foil comprises a 2a metal foil and a 2b metal foil, the 2a metal foil and the 2b metal foil being located along opposite edges of each of the negative electrode tabs in the longitudinal direction, respectively.

11. The secondary battery electrode assembly according to claim 9, wherein the second metal foil has a corrugated shape with repeated ridges and valleys formed by bending a band having a certain width and length.

12. The secondary battery electrode assembly according to claim 11, wherein the second metal foil comprises copper, nickel-coated copper, or a nickel-copper alloy.

13. The secondary battery electrode assembly according to claim 12, wherein the negative electrode lead is fixed to the second metal foil and the copper layer by ultrasonic welding.

14. The secondary battery electrode assembly according to claim 9, wherein the second resin layer is made of polyethylene terephthalate (PET).

15. A battery cell comprising the secondary battery electrode assembly according to any one of claims 1 to 14.
